# EUROPEAN PATENT APPLICATION

(11) **EP 4 793 022 A1**
(43) Date of publication of application: **19.08.2026**
(21) Application number: 24877277.4
(22) Date of filing: 11.10.2024
(51) Int. Cl.: B29C 49/64, B29C 49/06

(54) **BLOW MOLDING APPARATUS, BLOW MOLDING METHOD, AND MOLD**

(30) Priority: 13.10.2023 JP 2023177420
(71) Applicant: Nissei ASB Machine Co., Ltd., Komoro-shi, Nagano 384-8585 (JP)
(72) Inventor: OIKE, Toshiteru, Komoro-shi, Nagano 384-8585 (JP)
(74) Representative: Novagraaf International SA
(86) International application number: PCT/JP2024/036440
(87) International publication number: WO 2025/079683

(57) **Abstract**

A blow molding apparatus (100) includes: an injection molding section (110) configured to injection-mold a preform (20) made of resin and having a bottomed shape; a temperature adjusting section (120) configured to adjust a temperature of the preform (20) using a heating rod (210); and a blow molding section (130) configured to blow-mold the preform (20) whose temperature has been adjusted by the temperature adjusting section (120). The temperature adjusting section (120) includes a tubular member (220) configured to hold the heating rod (210) therein (220), and a supporting member (230) configured to support the tubular member (220). The tubular member (220) is provided with an eccentricity adjusting section (221) capable of adjusting eccentricity of the heating rod (210). The supporting member (230) is provided with a positioning section (234) capable of positioning a rotational position of the cylindrical member (220).

## Description

### TECHNICAL FIELD

The present disclosure relates to a blow molding apparatus, a blow molding method, and a mold.

### BACKGROUND ART

One known method for manufacturing a resin container is a hot parison blow molding method. The hot parison blow molding method is a method of blow-molding a resin container by utilizing residual heat of a preform during injection molding and is advantageous in manufacturing a wide variety of resin containers having an excellent aesthetic appearance as compared with a cold parison blow molding method.

As described above, the hot parison blow molding method is a method of utilizing an amount of heat remaining in a preform derived from injection molding. In this method, adjusting the temperature of the preform after injection molding to a temperature suitable for blowing is important. In view of this, a known blow molding apparatus is provided with a temperature adjusting section upstream of a blow molding section, and a heating rod or the like provided in the temperature adjusting section is used, for example, to eliminate temperature unevenness of the preform or to impart a temperature distribution suitable for container forming. For example, Patent Document 1 discloses a molding apparatus having a structure for adjusting a temperature distribution in an axial direction of a preform to a temperature suitable for stretching.

### CITATION LIST

### PATENT LITERATURE

Patent Document 1: JP 06-315973 A

### SUMMARY OF INVENTION

### TECHNICAL PROBLEM

In blow molding, adjusting eccentricity of the heating rod and aligning the heating rod with a low-temperature region of the preform before actual operation of the blow molding apparatus are important. However, in the known device configuration, an operator adjusts eccentricity of the heating rod and the alignment by advancing and retracting a plurality of set screws with respect to a tubular member holding the heating rod, resulting in poor workability.

In view of such circumstances, an object of the present disclosure is to provide a blow molding apparatus, a blow molding method, and a mold capable of improving workability of adjusting eccentricity and position of a heating rod.

### SOLUTION TO PROBLEM

A blow molding apparatus according to one aspect of the present disclosure includes:
an injection molding section configured to injection-mold a preform made of resin and having a bottomed shape;
a temperature adjusting section configured to adjust a temperature of the preform using a heating rod; and
a blow molding section configured to blow-mold the preform whose temperature has been adjusted by the temperature adjusting section, in which the temperature adjusting section includes a tubular member configured to hold the heating rod therein and a supporting member configured to support the tubular member,
the tubular member is provided with an eccentricity adjusting section capable of adjusting eccentricity of the heating rod, and
the supporting member is provided with a positioning section capable of positioning a rotational position of the tubular member.

A blow molding method according to one aspect of the present disclosure includes:
an injection molding step of injection-molding a preform made of resin and having a bottomed shape;
a temperature adjusting step of adjusting a temperature of the preform using a heating rod of a temperature adjusting section; and
a blow molding step of blow-molding the preform whose temperature has been adjusted in the temperature adjusting step, in which
in a preparation stage before actual operation of the blow molding method, adjusting eccentricity of the heating rod and positioning a rotational position of a tubular member configured to hold the heating rod therein are separately performable.

A mold in a temperature adjusting section according to one aspect of the present disclosure is configured to adjust a temperature of a preform, the mold including:
a heating rod;
a tubular member configured to hold the heating rod therein; and
a supporting member configured to support the tubular member, in which
the tubular member is provided with an eccentricity adjusting section capable of adjusting eccentricity of the heating rod, and
the supporting member is provided with a positioning section capable of positioning a rotational position of the tubular member.

In the above-mentioned configuration, adjusting eccentricity of the heating rod and positioning the rotational position of the tubular member configured to hold the heating rod therein can be separately performed. That is, the operator can adjust eccentricity of the heating rod and align the heating rod in respective separate work areas, thereby improving workability.

### ADVANTAGEOUS EFFECTS OF INVENTION

The present disclosure provides a blow molding apparatus, a blow molding method, and a mold capable of improving the workability of adjusting eccentricity and position of a heating rod.

### BRIEF DESCRIPTION OF DRAWINGS

FIG. 1 is a functional block diagram of a blow molding apparatus according to the present embodiment.
FIG. 2 is a diagram illustrating an example of a temperature adjusting mold according to the present embodiment.
FIG. 3 is a diagram illustrating an example of a plunger fitted in a recessed portion.
FIG. 4 is a diagram illustrating an example of the plunger disengaged from the recessed portion.
FIG. 5 is a diagram illustrating an example of the plunger fitted in another recessed portion.
FIG. 6 is a flowchart of a blow molding method according to the present embodiment.

### DESCRIPTION OF EMBODIMENTS

Hereinafter, embodiments of the present disclosure will be described with reference to the drawings. Dimensions of members illustrated in the drawings may differ from the actual dimensions of the members for convenience of explanation.

### Blow Molding Apparatus 100

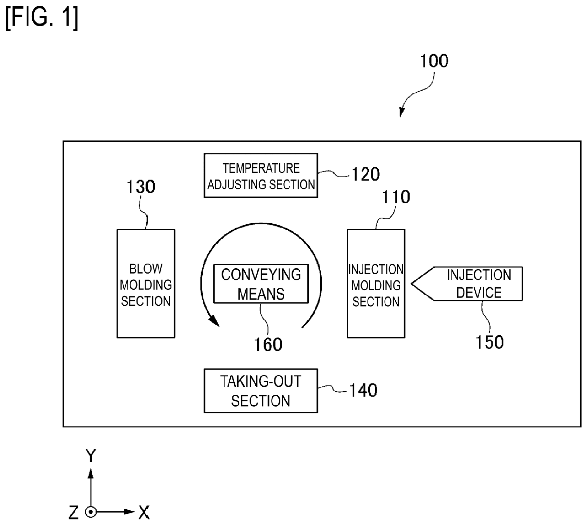

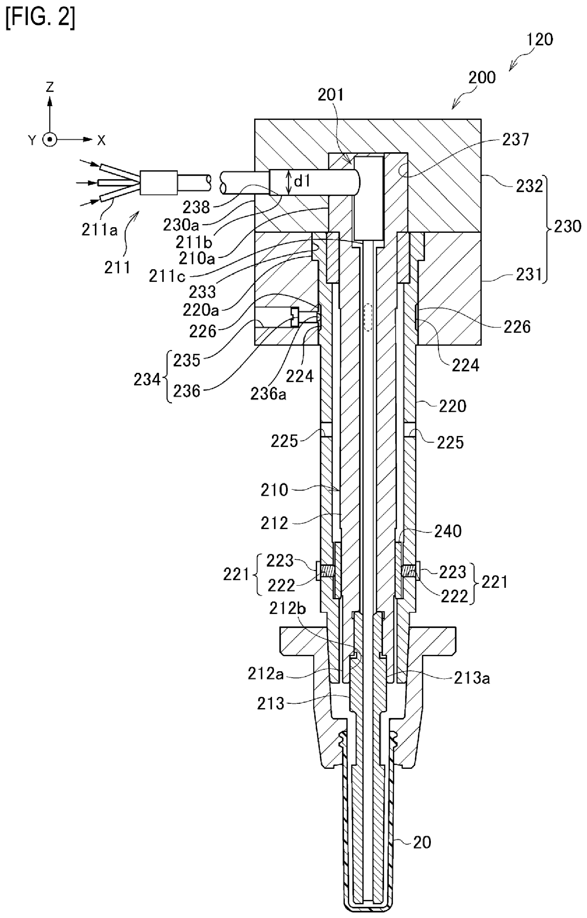

A blow molding apparatus 100 for manufacturing a container will be described with reference to FIG. 1. The blow molding apparatus 100 according to the present embodiment is a hot parison apparatus (also referred to as a one-stage apparatus) configured to blow-mold a preform 20 by utilizing residual heat (internal heat amount) generated during injection molding without cooling the preform 20 (see FIG. 2) to room temperature. FIG. 1 is a functional block diagram of the blow molding apparatus 100.

The blow molding apparatus 100 manufactures, for example, a resin container having a single-layer structure. The blow molding apparatus 100 may manufacture, for example, a resin container having a two-layer structure in which an inner layer and an outer layer located outside the inner layer are laminated. The material of the container is, for example, a thermoplastic synthetic resin, and can be appropriately selected according to the intended use of the container. Specific examples of the material include, for example, polyethylene terephthalate (PET), polyethylene naphthalate (PEN), polycyclohexanedimethylene terephthalate (PCTA), TRITAN (registered trademark: a copolyester manufactured by Eastman Chemical Company), polypropylene (PP), polyethylene (PE), polycarbonate (PC), polyether sulfone (PES), polyphenylsulfone (PPSU), polystyrene (PS), cyclic olefin polymer (COP/COC), polymethyl methacrylate (PMMA; acrylic), and polylactic acid (PLA).

As exemplified in FIG. 1, the blow molding apparatus 100 includes an injection molding section 110 for manufacturing the preform 20, and a temperature adjusting section 120 for adjusting the temperature of the manufactured preform 20. An injection device 150 that supplies a resin material as a raw material is connected to the injection molding section 110. The blow molding apparatus 100 includes a blow molding section 130 for manufacturing a container by blow-molding the preform 20, and a taking-out section 140 for taking a manufactured container out.

The injection molding section 110, the temperature adjusting section 120, the blow molding section 130, and the taking-out section 140 are provided at positions rotated by predetermined angles (90 degrees in the present embodiment) about a conveying means 160. The conveying means 160 includes a rotary plate (not illustrated in the drawing) that rotates about an axis in the depth direction in FIG. 1 (Z direction). The conveying means 160 is configured to convey, in the order of the injection molding section 110, the temperature adjusting section 120, the blow molding section 130, and the taking-out section 140, the preform 20 or a container molded from the preform 20, the neck portion of which is held by a neck mold (not illustrated in the drawing) attached to the rotary plate, by rotating the rotary plate.

The injection molding section 110 includes, for example, an injection cavity mold (not illustrated in the drawing) and an injection core mold (not illustrated in the drawing). In the injection molding section 110, the injection cavity mold, the injection core mold, and the neck mold of the conveying means 160 are clamped to form a mold cavity having a preform shape. Then, the resin material is supplied from the injection device 150 into the mold cavity having the preform shape, whereby the preform 20 made of resin with a bottomed shape is manufactured at the injection molding section 110. When the mold of the injection molding section 110 is opened, the neck mold of the conveying means 160 is not released, and the conveying means 160 holds and conveys the preform 20.

The temperature adjusting section 120 is configured to adjust the temperature of the preform 20 manufactured by the injection molding section 110 to a temperature suitable for the final blow molding. The temperature suitable for the final blow molding is approximately 90°C to 105°C, for example. The temperature adjusting section 120 includes a temperature adjusting mold 200 (see FIG. 2).

Now, the temperature adjusting mold 200 will be described with reference to FIG. 2. The temperature adjusting mold 200 is a mold in the temperature adjusting section 120 configured to adjust the temperature of the preform 20. As exemplified in FIG. 2, the temperature adjusting mold 200 includes a heating mechanism 201 (also referred to as a temperature adjusting core mold or a heating core mold), and a temperature adjusting cavity mold (not illustrated in the drawing; also referred to as a temperature adjusting pot mold and a heating pot mold). The heating mechanism 201 includes at least a heating rod 210, a tubular member 220 configured to hold the heating rod 210 therein, a supporting member 230 configured to support the tubular member 220, and a cylindrical member 240.

The heating rod 210 includes a heater 211, a rod member 212, and a protecting member 213 (tip end member). The heater 211 and the rod member 212 are partially accommodated inside the supporting member 230. The heater 211 is, for example, a sheathed heater or a cartridge heater. The heater 211 includes a lead 211a, a coupling tube 211b, and a heater body portion 211c. In the present embodiment, the heater 211 includes a plurality of the leads 211a; however, the number of leads 211a provided in the heater 211 may be one.

The lead 211a is connected to the heater 211, and when current flows through the lead 211a, the heater 211 is caused to generate heat (more specifically, a heating element such as a nichrome wire accommodated inside the heater 211 is caused to generate heat). The lead 211a is accommodated inside the coupling tube 211b and the heater body portion 211c. The lead 211a is bundled by the coupling tube 211b.

The coupling tube 211b is coupled to an upper portion of the heater body portion 211c. The coupling tube 211b extends toward an insertion hole 238 (described below) provided in an upper portion 230a of the supporting member 230 through a notch portion (not illustrated in the drawing) provided in an upper portion 210a of the rod member 212. The diameter of the insertion hole 238 is greater than a diameter D1 of the coupling tube 211b. A recessed portion may be formed in the upper portion 230a of the supporting member 230, and a placing portion (not illustrated in the drawing) for loosely fixing the coupling tube 211b may be provided.

When supplied with electricity from the lead 211a, the heater body portion 211c raises the temperature to the desired temperature. The heater body portion 211c is a cylindrical member extending in an up-down direction (Z direction) in FIG. 2. The diameter (the length in the X direction in FIG. 2) of the heater body portion 211c is shorter (smaller) than the diameter (the length in the X direction in FIG. 2) of the rod member 212 and the diameter (the length in the X direction in FIG. 2) of the tubular member 220. The length of the heater body portion 211c in the Z direction in FIG. 2 is greater than the length of the rod member 212 in the Z direction in FIG. 2 and the length of the tubular member 220 in the Z direction in FIG. 2. The preform 20 is located in the vicinity of the lower end portion of the heater body portion 211c.

The rod member 212 has, for example, a substantially cylindrical shape. The rod member 212 is hollow. The heater body portion 211c of the heater 211 is accommodated inside the rod member 212. A accommodating section 212b configured to accommodate an upper end portion 213a of the protecting member 213 is provided at a lower end portion 212a of the rod member 212. In the accommodating section 212b, the rod member 212 is positioned close to the protecting member 213 so as to be in contact with or substantially in contact with the protecting member 213.

The protecting member 213 has, for example, a substantially cylindrical shape. The protecting member 213 is hollow. The heater body portion 211c of the heater 211 is accommodated inside the protecting member 213. The protecting member 213 is configured to transmit heat emitted from the heater body portion 211c to the preform 20 while protecting the heater body portion 211c such that the heater body portion 211c does not directly touch the preform 20. A heating element (such as a nichrome wire) is incorporated inside the heater body portion 211c at a position corresponding to the protecting member 213. In the protecting member 213, a portion inserted into the preform 20 heats the preform 20 from the inside (inner wall surface side). The temperature adjusting cavity mold not illustrated in the drawing heats the preform 20 or adjusts the temperature thereof from the outside (the external wall surface side).

The tubular member 220 has a substantially circular shape in plan view. An upper portion (step portion) 220a of the tubular member 220 is accommodated in the supporting member 230. That is, the upper portion 220a of the tubular member 220 is supported by the supporting member 230. The tubular member 220 is hollow. The rod member 212 and the cylindrical member 240 are accommodated inside the tubular member 220. The tubular member 220 includes a step portion on the inner diameter side at the upper end, and a collar member (second cylindrical member) is disposed at the step portion. The tubular member 220 supports the rod member 212 such that the collar member and an upper flange portion of the rod member 212 are brought into contact with each other. The tubular member 220 is rotatable in the circumferential direction of the tubular member 220. Thus, the tubular member 220 is rotatable relative to the supporting member 230. When the tubular member 220 rotates, the cylindrical member 240 rotates together with the tubular member 220 when the cylindrical member 240 is pressed by a pin-shaped member 223 inserted into a first through hole 222 of the tubular member 220 as described below. On the other hand, the rod member 212 does not rotate even when the tubular member 220 rotates. The tubular member 220 is provided with an eccentricity adjusting section 221, a plurality of recessed portions 224, and a rotation-use hole 225. In the present embodiment, the number of the recessed portions 224 and the number of the rotation-use holes 225 provided in the tubular member 220 are each at least two, for example, eight.

The eccentricity adjusting section 221 is configured to adjust eccentricity of the heating rod 210. The eccentricity adjusting section 221 is composed of the first through hole 222 provided in the tubular member 220, and the pin-shaped member 223 disposed in the first through hole 222. In the present embodiment, the number of the first through holes 222 and the number of the pin-shaped members 223 are each at least two, for example, 8, 6, 4, or 2. The first through hole 222 and the pin-shaped member 223 constitute one pair. One pair of the first through hole 222 and the pin-shaped member 223 are provided at the outer circumferential surface of the tubular member 220 at positions facing each other with the central axis of the tubular member 220 interposed therebetween.

The pin-shaped member 223 is, for example, a screw member such as a set screw. The pin-shaped member 223 is advanceable and retractable within the first through hole 222. The pin-shaped member 223 is configured to be able to press the cylindrical member 240 fitted into the heating rod 210 as the pin-shaped member 223 advances in the direction of the central axis of the cylindrical member 240 in the first through hole 222. When one pin-shaped member 223 advances, the other pin-shaped member 223 retreats.

The plurality of recessed portions 224 is provided in an outer circumferential surface 226 of the tubular member 220 along the circumferential direction of the tubular member 220. In the present embodiment, the recessed portions 224 are provided at the upper portion 220a of the tubular member 220. The recessed portions 224 are provided at a position opposite to a positioning section 234 of the supporting member 230 described below.

The rotation-use hole 225 is a hole for inserting a jig (not illustrated in the drawing) for rotating the tubular member 220 with respect to the supporting member 230. The rotation-use hole 225 is disposed on the upper side of the first through hole 222 of the tubular member 220. The rotation-use hole 225 may be disposed on the lower side of the first through hole 222 of the tubular member 220.

The supporting member 230 has a substantially cuboid shape. The supporting member 230 includes a first member 231, and a second member 232 disposed on the upper side of the first member 231. The first member 231 includes a first accommodation hole 233 capable of accommodating the heater 211, the rod member 212, and a portion (upper step portion) of the tubular member 220. The first accommodation hole 233 extends in the up-down direction (Z direction) in FIG. 2. The first member 231 is provided with the positioning section 234 capable of positioning the rotational position of the tubular member 220.

The positioning section 234 is composed of a second through hole 235 provided in the supporting member 230 and a plunger 236 disposed in the second through hole 235. The second through hole 235 extends in the left-right direction (X direction) in FIG. 2. The second through hole 235 communicates with the first accommodation hole 233.

The plunger 236 is a ball plunger provided with a ball member 236a at its tip end. The ball member 236a can rotate in a direction opposite to the rotational direction of the tubular member 220 as the tubular member 220 rotates. The ball member 236a is movable in the left-right direction (X direction) in FIG. 2.

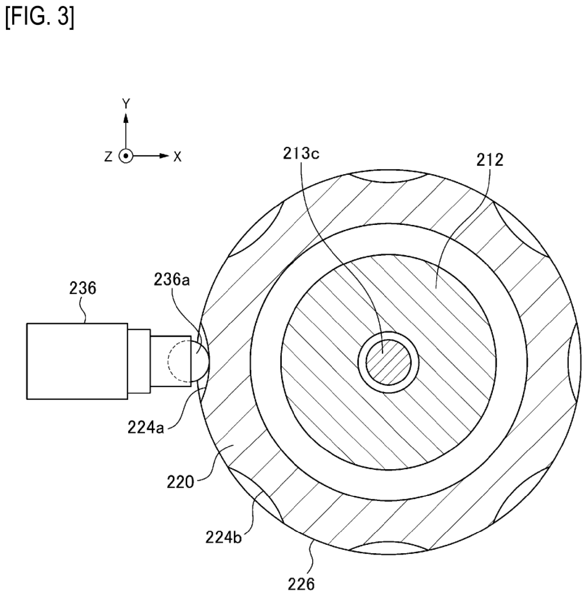

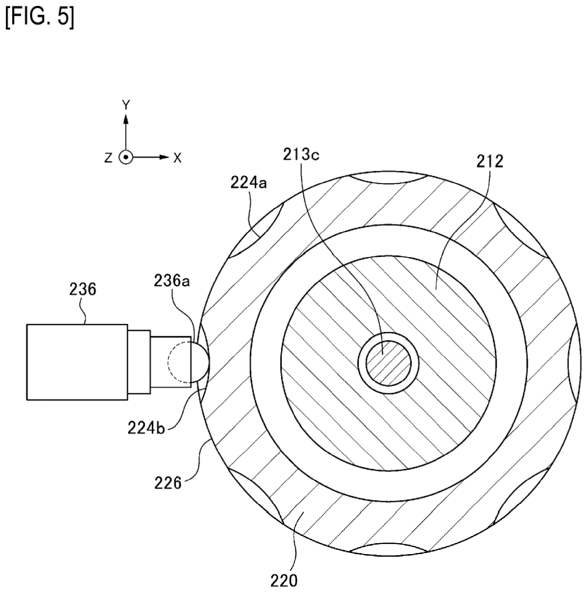

The plunger 236 can be fitted into each of the plurality of recessed portions 224 provided along the circumferential direction of the outer circumferential surface of the tubular member 220 as the tubular member 220 rotates. Now, with reference to FIGS. 3 to 5, a state transition from the state exemplified in FIG. 3 (a state where the plunger 236 is fitted into a recessed portion 224a) to the state exemplified in FIG. 5 (a state where the plunger 236 is fitted into a recessed portion 224b adjacent to the recessed portion 224a) will be described.

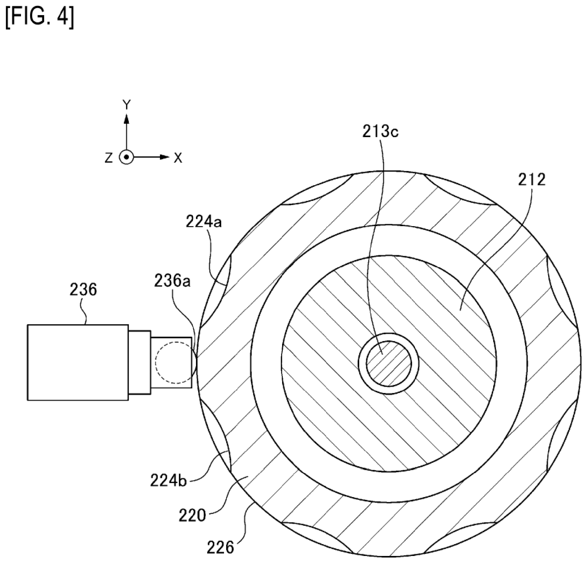

In the state exemplified in FIG. 3, when the user (operator) of the blow molding apparatus 100 rotates the tubular member 220 clockwise, the state transitions to the state exemplified in FIG. 4. At this time, the fitting relationship between the ball member 236a of the plunger 236 and the recessed portion 224a of the tubular member 220 is released, and the ball member 236a rotates on the outer circumferential surface of the tubular member 220. At this time, the ball member 236a is pressed by the tubular member 220 and moves leftward in FIG. 2.

When the tubular member 220 is further rotated clockwise from the state exemplified in FIG. 4, the plunger 236 fits into the recessed portion 224b. By repeating this operation, the operator can fit the plunger 236 into one recessed portion 224 among the plurality of recessed portions 224. For example, fitting the plunger 236 into the recessed portion 224 such that the eccentricity adjusting section 221 is located in front of the operator can increase operational efficiency of the user.

Referring to FIG. 2 again, the second member 232 of the supporting member 230 will be described. The second member 232 includes a second accommodation hole 237 capable of accommodating the heater 211 and a portion (upper end portion) of the rod member 212, and the insertion hole 238 into which a portion of the heater 211 can be inserted. The second accommodation hole 237 extends in the up-down direction (Z direction) in FIG. 2. The second accommodation hole 237 communicates with the first accommodation hole 233. The insertion hole 238 extends in the left-right direction (X direction) in FIG. 2. The second accommodation hole 237 and the insertion hole 238 communicate with each other. The inner diameter of the second accommodation hole 237 is greater than the diameter of a portion (upper end portion) of the rod member 212. The inner diameter of the insertion hole 238 is greater than the diameter D1 of the coupling tube 211b of the heater 211. The inner diameter of the tubular member 220 is greater than the diameter of the rod member 212. Thus, the heating rod 210 (the rod member 212, the heater 211, and the coupling tube 211b) can be eccentrically moved relative to the tubular member 220.

The cylindrical member 240 is, for example, a metal member. The cylindrical member 240 is disposed inside the tubular member 220. The cylindrical member 240 is hollow. The cylindrical member 240 is disposed to cover the rod member 212. Specifically, the cylindrical member 240 is fitted into the heating rod 210. The cylindrical member 240 is positioned close to the rod member 212 so as to be in contact with or substantially in contact with the rod member 212.

Referring to FIG. 1 again, the blow molding section 130 will be described. The blow molding section 130 is configured to manufacture a resin container by blow-molding the preform 20 whose temperature has been adjusted by the temperature adjusting section 120. The blow molding section 130 includes, for example, a stretching rod, a blow molding core mold, and a blow molding cavity mold.

The taking-out section 140 is configured to release a neck portion of a container manufactured by the blow molding section 130 from the neck mold of the conveying means 160 and take the container out.

### Blow Molding Method

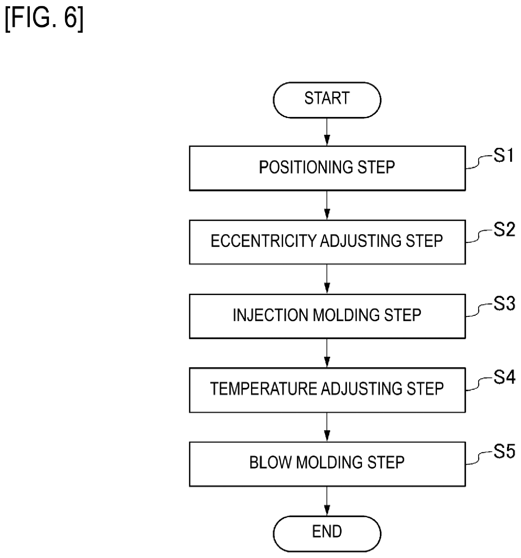

A blow molding method using the blow molding apparatus 100 according to the present embodiment will next be described. FIG. 6 is a flowchart of a blow molding method according to the present embodiment. As exemplified in FIG. 6, the blow molding method according to the present embodiment includes a positioning step S1 of positioning the rotational position of the tubular member 220 configured to hold the heating rod 210 therein, an eccentricity adjusting step S2 of adjusting eccentricity of the heating rod, an injection molding step S3 of injection-molding the preform 20, a temperature adjusting step S4 of adjusting the temperature of the preform 20, and a blow molding step S5 of manufacturing a container by blow-molding the preform 20 whose temperature has been adjusted. The positioning step S1 and the eccentricity adjusting step S2 are performed in a preparation stage before actual operation. On the other hand, the injection molding step S3, the temperature adjusting step S4, and the blow molding step S5 are performed in the actual operation stage. A manufactured container is taken out by releasing the neck portion of the container from the neck mold of the conveying means 160.

The positioning step S1 will first be described. In the present embodiment, before the positioning step S1, the operator performs a preliminary run of the blow molding method using the blow molding apparatus 100. The preliminary run refers to executing the blow molding method in the preparation stage. The purpose of the preliminary run is to confirm a thickness unevenness state of the container, identify a portion of the preform 20 at which temperature unevenness occurs, thereafter align the heating rod 210 with a low-temperature region of the preform 20, and adjust eccentricity of the heating rod 210. During the preliminary run, the plunger 236 is fitted into one recessed portion 224, and the pin-shaped members 223 are inserted into two first through holes 222 among the eight first through holes 222. The tubular member 220, the rod member 212, and the preform 20 are set in a concentric state and are not eccentrically displaced. In the description, the recessed portion 224 into which the plunger 236 is fitted at this time is referred to as a recessed portion 224 at the initial setting. In this specification, the first through hole 222 into which the pin-shaped member 223 is inserted at this time is referred to as an initial-setting first through hole 222. At this time, the operator may mark the tubular member 220 near the recessed portion 224 into which the plunger 236 is fitted in order to record the recessed portion 224 where the plunger 236 has been fitted at the start of the positioning step S1.

The operator confirms a thickness distribution (a thickness unevenness state) of the container based on the result of the preliminary run and identifies a circumferential portion of the body portion of the preform 20 at which temperature unevenness (low temperature) occurs. When the operator identifies the portion of the preform 20 at which temperature unevenness occurs, the operator first positions the rotational position of the tubular member 220 configured to hold the heating rod 210 therein in order to eliminate the temperature unevenness. More specifically, the operator determines the recessed portion 224 into which the plunger 236 is to be fitted from among the plurality of recessed portions 224. When the recessed portion 224 determined to receive the plunger 236 is the same as the recessed portion 224 into which the plunger 236 is fitted during the preliminary run (that is, the recessed portion 224 into which the plunger 236 is fitted during the preliminary run at the initial setting), the operator does nothing. On the other hand, when the recessed portion 224 determined to receive the plunger 236 is different from the recessed portion 224 into which the plunger 236 is fitted during the preliminary run, the operator rotates the tubular member 220, and fits the plunger 236 into the recessed portion 224 determined to receive the plunger 236. In this manner, at the positioning step S1, the rotational position of the tubular member 220 is positioned. Then, the rotational position of the tubular member 220 is positioned, whereby the heating rod 210 and a low-temperature region of the preform 20 are aligned.

The eccentricity adjusting step S2 will next be described. At the eccentricity adjusting step S2, the operator adjusts eccentricity of the heating rod 210. More specifically, the operator places the pin-shaped member 223 in a given first through hole 222, and then advances the pin-shaped member 223 inside the first through hole 222. When the pin-shaped member 223 advances inside the first through hole 222, the pin-shaped member 223 presses the cylindrical member 240, and as a result the rod member 212 positioned close to the cylindrical member 240 so as to be in contact with or substantially in contact with the cylindrical member 240 is pressed by the cylindrical member 240. That is, the operator indirectly presses the rod member 212 using the pin-shaped member 223 by advancing the pin-shaped member 223 inside the first through hole 222. The rod member 212 indirectly pressed by the pin-shaped member 223 moves in the pressing direction. When the rod member 212 moves in the pressing direction, the relative position between the heating rod 210 and the preform 20 changes. In this manner, at the eccentricity adjusting step S2, eccentricity of the heating rod 210 is adjusted. When one pin-shaped member 223 is advanced inside the first through hole 222, the other pin-shaped member 223 on the opposite side is retracted inside the first through hole 222.

In this manner, in the present embodiment, the rotational position of the tubular member 220 is positioned by the positioning section 234, and eccentricity of the heating rod 210 is adjusted by the eccentricity adjusting section 221. That is, in the present embodiment, the positioning step S1 and the eccentricity adjusting step S2 can be separately performed.

The injection molding step S3 will next be described. This step and subsequent steps (specifically, the injection molding step S3, the temperature adjusting step S4, and the blow molding step S5) are performed in the actual operation of the blow molding method. At the injection molding step S3, first, the injection core mold, the injection cavity mold, and the neck mold are clamped. Next, the preform 20 is formed by filling, with a resin material, the inside of the mold cavity formed by the injection core mold, the injection cavity mold, and the neck mold (filling process). After completion of the filling and after a cooling step for a certain (minimum) duration, the injection core mold is lifted to release the preform 20 from the injection core mold, and subsequently or simultaneously, the neck mold is lifted to release the preform 20 from the injection cavity mold. After the injection molding step S3, the preform 20 is moved from the injection molding section 110 to the temperature adjusting section 120.

The temperature adjusting step S4 will next be described. At the temperature adjusting step S4, the preform 20 moved to the temperature adjusting section 120 is accommodated in the temperature adjusting cavity mold (such as the heating pot mold and the temperature adjusting pot mold) by lowering the neck mold of the conveying means 160. Subsequently, the temperature adjusting core mold (the heating rod 210) is inserted into the interior of the preform 20. The insertion of the temperature adjusting core mold is performed by lowering the temperature adjusting core mold. The order of the accommodation in the temperature adjusting cavity mold and the insertion of the temperature adjusting core mold may be reversed. The accommodation in the temperature adjusting cavity mold and the insertion of the temperature adjusting core mold may be performed simultaneously. By placing the preform 20 between the temperature adjusting cavity mold and the temperature adjusting core mold, the temperature can be adjusted to a temperature suitable for blow molding while eliminating the temperature unevenness of the preform 20 in the circumferential direction of the body portion using the temperature adjusting core mold (the heating rod 210). Thereafter, the preform 20 is released from the temperature adjusting core mold by lifting the temperature adjusting core mold, and the preform 20 is released from the temperature adjusting cavity mold by lowering the temperature adjusting cavity mold. After the temperature adjusting step S4, the preform 20 is moved from the temperature adjusting section 120 to the blow molding section 130.

The blow molding step S5 will next be described. At the blow molding step S5, the preform 20 moved to the blow molding section 130 is accommodated in the blow molding cavity mold. Subsequently, by introducing blow air from the blow molding core mold while optionally stretching the preform 20 using a stretching rod, the preform 20 whose temperature has been adjusted at the temperature adjusting step S4 is expanded into the shape of the container, thereby manufacturing the container. Thereafter, the container is released from the mold of the blow molding section 130, conveyed to the taking-out section 140, and taken out. Through the above-described procedure, a container is manufactured.

In blow molding, adjusting eccentricity of the heating rod and aligning the heating rod with a low-temperature region of the preform before actual operation of the blow molding apparatus are important. However, in the known device configuration, the operator adjusts eccentricity of the heating rod and the alignment by advancing and retracting a plurality of (e.g., six) set screws with respect to the tubular member holding the heating rod, resulting in poor workability.

In the blow molding apparatus 100 according to the above-mentioned embodiment, the temperature adjusting section 120 includes the tubular member 220 where the eccentricity adjusting section 221 is provided, and the supporting member 230 where the positioning section 234 is provided. That is, the eccentricity adjusting section 221 and the positioning section 234 are provided in different members (the tubular member 220 or the supporting member 230). In this manner, the operator can align the heating rod 210 and adjust eccentricity of the heating rod 210 in respective separate work areas, thereby improving workability. The same technical effects can also be achieved in the blow molding method and the temperature adjusting mold 200 according to the above-mentioned embodiment.

In the blow molding apparatus 100 according to the above-mentioned embodiment, the eccentricity adjusting section 221 is composed of the first through hole 222 and the pin-shaped member 223. Further, in the blow molding apparatus 100, as the pin-shaped member 223 advances in the first through hole 222, the pin-shaped member 223 presses the cylindrical member 240 fitted into the heating rod 210. In this manner, the eccentricity of the heating rod 210 can be adjusted. In this manner, in the blow molding apparatus 100, the eccentricity adjusting section 221 can be configured with a simple configuration. Eccentricity of the heating rod 210 can be adjusted simply by changing amounts of advancement and retraction of the two pin-shaped members 223 in the vicinity of the extension of a low-temperature region of the preform 20, thereby providing better workability than that of known heating rods.

In the blow molding apparatus 100 according to the above-mentioned embodiment, the positioning section 234 is composed of the second through hole 235 and the plunger 236. Further, in the blow molding apparatus 100, as the tubular member 220 rotates, the plunger 236 is fitted into one recessed portion 224 among the plurality of recessed portions 224 provided in the outer circumferential surface 226 of the tubular member 220 along the circumferential direction. In this manner, the rotational position of the tubular member 220 can be positioned. In this manner, with the blow molding apparatus 100, the positioning section 234 can be configured with a simple configuration.

In the blow molding apparatus 100 according to the above-mentioned embodiment, the rotation-use hole 225 for inserting a jig for rotating the tubular member 220 with respect to the supporting member 230 is disposed on the upper side of the first through hole 222. In this manner, the operator can easily rotate the tubular member 220 with respect to the supporting member 230.

The above-described embodiment is provided to facilitate understanding of the present disclosure and does not limit the present disclosure. The present disclosure may be modified and improved without departing from the gist thereof.

In the above-mentioned embodiment, the rod member 212 does not rotate even when the tubular member 220 rotates, but the rod member 212 may rotate together with the tubular member 220 as the tubular member 220 rotates.

In the above-mentioned embodiment, the heating rod 210 may not include the rod member 212. In this case, the eccentricity of the heating rod 210 is adjusted by advancing the pin-shaped member 223 inside the first through hole 222, and directly pressing the rod member 212 using the pin-shaped member 223.

In the above-mentioned embodiment, the order of the positioning step S1 for the heating rod 210 and the eccentricity adjusting step S2 may be reversed.

As described above, the specification discloses the following matters.
(1) A blow molding apparatus including:
   an injection molding section configured to injection-mold a preform made of resin and having a bottomed shape;
   a temperature adjusting section configured to adjust a temperature of the preform using a heating rod; and
   a blow molding section configured to blow-mold the preform whose temperature has been adjusted by the temperature adjusting section, in which the temperature adjusting section includes a tubular member configured to hold the heating rod therein, and a supporting member configured to support the tubular member,
   the tubular member is provided with an eccentricity adjusting section capable of adjusting eccentricity of the heating rod, and
   the supporting member is provided with a positioning section capable of positioning a rotational position of the tubular member.
(2) The blow molding apparatus according to (1), in which
   the eccentricity adjusting section includes a first through hole provided in the tubular member, and a pin-shaped member disposed in the first through hole, and
   the pin-shaped member presses a cylindrical member fitted into the heating rod as the pin-shaped member advances in the first through hole.
(3) The blow molding apparatus according to (1) or (2), in which
   the positioning section includes a second through hole provided in the supporting member and a plunger disposed in the second through hole, and
   as the tubular member rotates, the plunger is fitted into each of a plurality of recessed portions provided in an outer circumferential surface of the tubular member along a circumferential direction.
(4) The blow molding apparatus according to any one of (1) to (3), in which
   the tubular member is provided with a rotation-use hole for inserting a jig for rotating the tubular member with respect to the supporting member, and
   the rotation-use hole is provided above the first through hole of the tubular member.
(5) A blow molding method including:
   an injection molding step of injection-molding a preform made of resin and having a bottomed shape;
   a temperature adjusting step of adjusting a temperature of the preform using a heating rod of a temperature adjusting section; and
   a blow molding step of blow-molding the preform whose temperature has been adjusted in the temperature adjusting step, in which
   in a preparation stage before actual operation of the blow molding method,
   adjusting eccentricity of the heating rod and positioning a rotational position of a tubular member configured to hold the heating rod therein are separately performable.
(6) A mold in a temperature adjusting section configured to adjust a temperature of a preform, the mold including:
   a heating rod;
   a tubular member configured to hold the heating rod therein; and
   a supporting member configured to support the tubular member, in which
   the tubular member is provided with an eccentricity adjusting section capable of adjusting eccentricity of the heating rod, and
   the supporting member is provided with a positioning section capable of positioning a rotational position of the tubular member.

This application is based on Japanese Patent Application filed on October 13, 2023 (JP 2023-177420 A), the contents of which are incorporated herein by reference.

### REFERENCE SIGNS LIST

20: Preform, 100: Blow molding apparatus, 110: Injection molding section, 120: Temperature adjusting section, 130: Blow molding section, 140: Taking-out section, 150: Injection device, 160: Conveying means, 200: Temperature adjusting mold, 201: Heating mechanism, 210: Heating rod, 210a: Upper portion, 211: Heater, 211a: Lead, 211b: Coupling tube, 211c: Heater body portion, 212: Rod member, 212a: Lower end portion, 212b: Accommodating section, 213: Protecting member, 213a: Upper end portion, 220: Tubular member, 220a: Upper portion, 221: Eccentricity adjusting portion, 222: First through hole, 223: Pin-shaped member, 224, 224a, 224b: Recessed portion, 225: Rotation-use hole, 226: Outer circumferential surface, 230: Supporting member, 230a: Upper portion, 231: First member, 232: Second member, 233: First accommodation hole, 234: Positioning portion, 235: Second through hole, 236: Plunger, 236a: Ball member, 237: Second accommodation hole, 238: Insertion hole, 240: Cylindrical member

## Claims

1. A blow molding apparatus, comprising:
an injection molding section configured to injection-mold a preform made of resin and having a bottomed shape;
a temperature adjusting section configured to adjust a temperature of the preform using a heating rod; and
a blow molding section configured to blow-mold the preform whose temperature has been adjusted by the temperature adjusting section, wherein
the temperature adjusting section includes a tubular member configured to hold the heating rod therein and a supporting member configured to support the tubular member,
the tubular member is provided with an eccentricity adjusting section capable of adjusting eccentricity of the heating rod, and
the supporting member is provided with a positioning section capable of positioning a rotational position of the tubular member.

2. The blow molding apparatus according to claim 1, wherein
the eccentricity adjusting section includes a first through hole provided in the tubular member and a pin-shaped member disposed in the first through hole, and
the pin-shaped member is configured to press a cylindrical member fitted into the heating rod as the pin-shaped member advances in the first through hole.

3. The blow molding apparatus according to claim 1, wherein
the positioning section includes a second through hole provided in the supporting member and a plunger disposed in the second through hole, and
the plunger is configured to be fitted into each of a plurality of recessed portions provided in an outer circumferential surface of the tubular member along a circumferential direction as the tubular member rotates.

4. The blow molding apparatus according to claim 1, wherein
the tubular member is provided with a rotation-use hole for inserting a jig for rotating the tubular member with respect to the supporting member, and
the rotation-use hole is provided above the first through hole of the tubular member.

5. A blow molding method, comprising:
an injection molding step of injection-molding a preform made of resin and having a bottomed shape;
a temperature adjusting step of adjusting a temperature of the preform using a heating rod of a temperature adjusting section; and
a blow molding step of blow-molding the preform whose temperature has been adjusted in the temperature adjusting step, wherein
in a preparation stage before actual operation of the blow molding method,
an eccentricity adjusting step of adjusting eccentricity of the heating rod and a positioning step of positioning a rotational position of a tubular member configured to hold the heating rod therein are separately performable.

6. A mold in a temperature adjusting section configured to adjust a temperature of a preform, the mold comprising:
a heating rod;
a tubular member configured to hold the heating rod therein; and
a supporting member configured to support the tubular member, wherein
the tubular member is provided with an eccentricity adjusting section capable of adjusting eccentricity of the heating rod, and
the supporting member is provided with a positioning section capable of positioning a rotational position of the tubular member.
